# EUROPEAN PATENT SPECIFICATION

(11) **EP 4 378 977 B1**
(45) Date of publication and mention of the grant of the patent: **14.05.2025**
(21) Application number: 23212436.2
(22) Date of filing: 27.11.2023
(51) Int. Cl.: C08G 64/14, C08G 64/42, C08L 71/12, C09J 171/12

(54) **CARBONATE-CONTAINING OLIGOMER, MANUFACTURING METHOD THEREOF, AND CROSSLINKED PRODUCT**
CARBONATHALTIGES OLIGOMER, HERSTELLUNGSVERFAHREN DAFÜR UND VERNETZTES PRODUKT
OLIGOMÈRE CONTENANT DU CARBONATE, SON PROCÉDÉ DE FABRICATION ET PRODUIT RÉTICULÉ

(30) Priority: 29.11.2022 TW 111145723
(43) Date of publication of application: 05.06.2024
(73) Proprietor: Swancor Innovation & Incubation Co., Ltd., Nantou City, Nantou County 540028 (TW)
(72) Inventor: KAO, Jun-Qi, 540028 Nantou City, Nantou County (TW)
(74) Representative: Ter Meer Steinmeister & Partner

(56) References cited:
- WO-A1-2020/189598
- US-A1- 2022 098 399
- NISHIKUBO TADATOMI ET AL: "Study of photopolymers. XXX. Syntheses of new di(meth) acrylate oligomers by addition reactions of epoxy compounds with active esters", JOURNAL OF POLYMER SCIENCE PART A: POLYMER CHEMISTRY, vol. 25, no. 11, 1 November 1987 (1987-11-01), US, pages 3049 - 3062, XP093113234, ISSN: 0887-624X, DOI: 10.1002/pola.1987.080251110

## Description

### BACKGROUND

### Technical Field

The present disclosure relates to an oligomer, a manufacturing method thereof and a crosslinked product. More particularly, the present disclosure relates to a carbonate-containing oligomer derived from an epoxy resin, a manufacturing method thereof and a crosslinked product.

### Description of Related Art

Nowadays, driven by the rapid development of the electronic technology, the information processing of the electronic products such as mobile communications, servers and cloud storages are developing toward the high-frequency transmission. Furthermore, with the surge in the amount of information communication in recent years, the demand for the high-frequency printed circuit board is getting higher and higher. In order to reduce transmission losses in the high-frequency band, the materials with excellent electrical performance have become the focus of research in the related fields, and to maintain the normal operation of the electronic components in the high-temperature and high-humidity environments, the circuit boards must be heat-resistant, flame-retardant, and low water absorption.

Currently, in the field of the circuit boards, the epoxy resin is often used with the phenolic resin or dicyandiamide for curing as insulation and adhesive materials. However, although this type of material has good processing characteristic and copper foil adhesion, it has the disadvantage of polar functional groups generated after curing to cause the decrease of the electrical performance, which is difficult to meet the needs of the high-frequency and the high-speed circuit boards. In response to the above disadvantages, some technologies have directed the use of epoxy resin with active ester or styrene-maleic anhydride copolymer (SMA) to overcome the generation of the highly polar group after curing. WO2020/189598 A1 relates to a terminal (meth) acrylate polycarbonate oligomer having good solvent solubility and excellent wear resistance when cured. WO2020/189598 A1 discloses polycarbonate oligomers of formula 1a), 1b), 2a) and 2b).

However, even if the electrical performance is improved, it is still insufficient for use in the high-frequency and low-loss application.

Therefore, how to synthesize a new type of resin, so that it can be introduced into the high-frequency and low-loss application, which is the goal of the relevant industry.

### SUMMARY

According to one aspect of the present disclosure, a carbonate-containing oligomer is provided. The carbonate-containing oligomer includes a structure represented by formula (I): 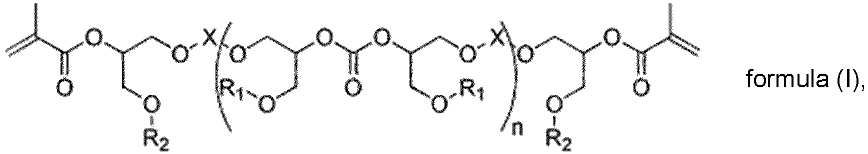 wherein R₁, R₂ and X are each independently an aromatic ring group, and n is an integer from 1 to 5.

According to another aspect of the present disclosure, a manufacturing method for a carbonate-containing oligomer includes steps as follows. A mixing step is performed, wherein a purified bifunctional epoxy resin represented by formula (i) is mixed with a carbonate-containing compound represented by formula (ii), and a first mixture is obtained by heating to a first temperature to accelerate a dissolution: 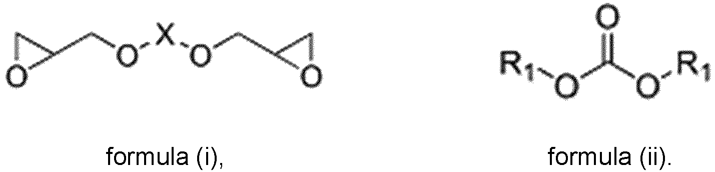 A first active transesterification step is performed, wherein a catalyst is added to the first mixture and maintained at the first temperature to react, so as to obtain a second mixture. A dilution mixing step is performed, wherein an aromatic ring solvent and a methacrylic acid active ester represented by formula (iii) are added to the second mixture and mixed to obtain a third mixture: 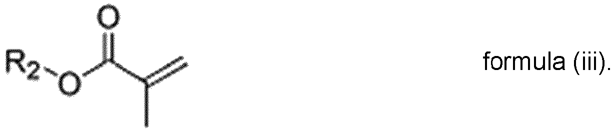 A second active transesterification step is performed, wherein the third mixture is heated to a second temperature and maintained at the second temperature to react, so as to obtain a fourth mixture. A filtering step is performed, wherein the fourth mixture is cooled and filtered to obtain the carbonate-containing oligomer represented by formula (I): 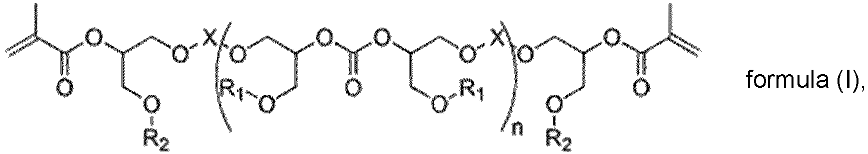 wherein R₁, R₂ and X are each independently an aromatic ring group, and n is an integer from 1 to 5.

According to the manufacturing method for the carbonate-containing oligomer of the foregoing aspect, the first temperature can be not higher than 130°C.

According to the manufacturing method for the carbonate-containing oligomer of the foregoing aspect, the first temperature can be 80°C to 120°C.

According to the manufacturing method for the carbonate-containing oligomer of the foregoing aspect, the catalyst can be a pyridine derivative, an imidazole derivative or a quaternary alkylammonium salt derivative.

According to the manufacturing method for the carbonate-containing oligomer of the foregoing aspect, an added amount of the catalyst can be 500 ppm to 5000 ppm.

According to the manufacturing method for the carbonate-containing oligomer of the foregoing aspect, the aromatic ring solvent can be benzene, toluene or xylene.

According to the manufacturing method for the carbonate-containing oligomer of the foregoing aspect, the second temperature can be 110°C to 130°C.

According to further another aspect of the present disclosure, a crosslinked product is provided. The crosslinked product is obtained by mixing the carbonate-containing oligomer according to the foregoing aspect with a modified polyphenylene ether resin, and adding a peroxide to perform a curing reaction.

According to the crosslinked product of the foregoing aspect, a solid content ratio of the carbonate-containing oligomer and the modified polyphenylene ether resin can be 50:50 to 10:90.

According to the crosslinked product of the foregoing aspect, the modified polyphenylene ether resin can be methacrylate-modified polyphenylene ether.

### BRIEF DESCRIPTION OF THE DRAWINGS

The present disclosure can be more fully understood by reading the following detailed description of the embodiment, with reference made to the accompanying drawings as follows:

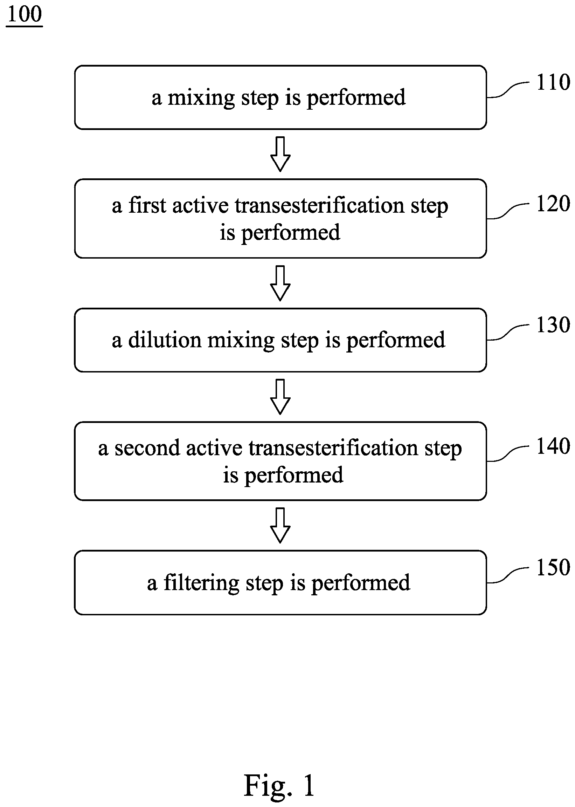

Fig. 1 is a flow chart of a manufacturing method for a carbonate-containing oligomer according to one embodiment of the present disclosure.

### DETAILED DESCRIPTION

The present disclosure will be further exemplified by the following specific embodiments. However, the embodiments can be applied to various inventive concepts and can be embodied in various specific ranges. The specific embodiments are only for the purposes of description, and are not limited to these practical details thereof.

In the present disclosure, the compound structure can be represented by a skeleton formula, and the representation can omit the carbon atom, the hydrogen atom and the carbon-hydrogen bond. In the case that the functional group is depicted clearly in the structural formula, the depicted one is preferred.

In the present disclosure, in order to concise and smooth, "a carbonate-containing oligomer, including a structure represented by formula (I)" can be represented as a carbonate-containing oligomer represented by formula (I) or a carbonate-containing oligomer (I) in some cases, and the other compounds or groups can be represented in the same manner.

In the present disclosure, if a group is not indicated specifically which is substituted or not, the group can be represented the substituted or unsubstituted group. For example, "alkyl group" can be represented the substituted or unsubstituted alkyl group.

### <Carbonate-Containing Oligomer >

A carbonate-containing oligomer is provided of the present disclosure, which includes a structure represented by formula (I): 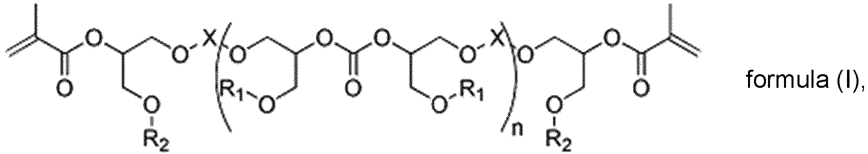 wherein R₁, R₂ and X are each independently an aromatic ring group, and n is an integer from 1 to 5.

Specifically, the present disclosure uses the transesterification reaction between the epoxy resin and the bis-aryl carbonate to introduce the carbonate group and the free radical curable functional group into the epoxy resin for modification. At the same time, the electrical performance advantage of the free radical curing that does not produce the polar functional group can be retained, and the good nucleophilic property of the carbonate structure towards the metal and the fiber can be satisfied. Therefore, the carbonate-containing oligomer of the present disclosure has a great potential in the field of glass fiber prepreg and the high-frequency and low-loss substrate.

### <Manufacturing Method for Carbonate-Containing Oligomer>

Reference is made to Fig. 1, which is a flow chart of a manufacturing method for a carbonate-containing oligomer 100 according to one embodiment of the present disclosure. In Fig. 1, the manufacturing method for the carbonate-containing oligomer 100 includes a step 110, a step 120, a step 130, a step 140 and a step 150.

In the step 110, a mixing step is performed, wherein a purified bifunctional epoxy resin represented by formula (i) is mixed with a carbonate-containing compound represented by formula (ii), and a first mixture is obtained by heating to a first temperature to accelerate a dissolution: 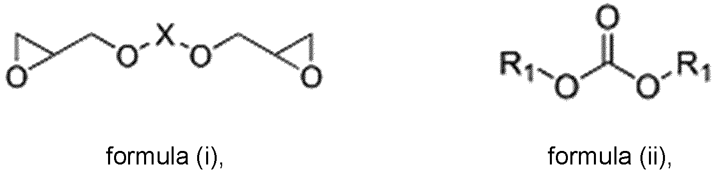 wherein X and R₁ is an aromatic ring group. The first temperature of the present disclosure is for accelerating the bifunctional epoxy resin and the carbonate-containing compound to achieve the complete dissolution. The first temperature is not higher than 130°C to prevent the bifunctional epoxy resin from self-polymerizing and increasing the viscosity. If the first temperature is too low, the reaction rate will be low, so that the reaction time will be prolonged. Therefore, in the present disclosure, the first temperature preferably can be 80°C to 120°C, but is not limited thereto.

Specifically, "purified" in the purified bifunctional epoxy resin of the present disclosure represents that the bifunctional epoxy resin does not contain the OH functional group, and can be various types of the epoxy resin commonly known in the art. Commonly used bifunctional epoxy resin can be but not limited to the commercially available epoxy resin product such as bisphenol A epoxy resin, bisphenol F epoxy resin, biphenyl epoxy resin or naphthol epoxy resin. Preferably, the purified bifunctional epoxy resin of the present disclosure can be bisphenol A epoxy resin, which has a structure represented by formula (i-1): 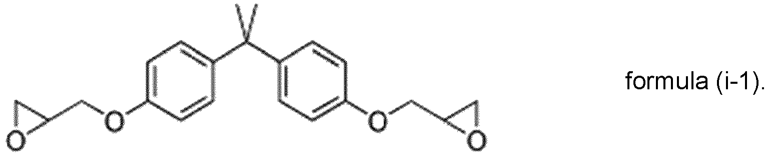 Furthermore, R₁ can be but not limited to phenyl group, monofluorophenyl group, perfluorophenyl group or 4-tert-butylphenyl group, preferably, R₁ of the present disclosure is phenyl group, which has a structure represented by formula (ii-1):

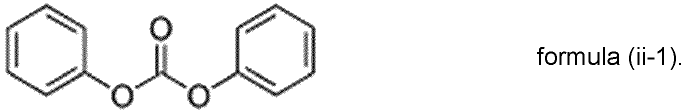

In the step 120, a first active transesterification step is performed, wherein a catalyst is added to the first mixture and maintained at the first temperature to react, so as to obtain a second mixture. Specifically, the catalyst is preferably a pyridine derivative, an imidazole derivative or a quaternary alkylammonium salt derivative, which can be but not limited to 4-dimethylaminopyridine (DMAP), 1-alkylimidazole, 1-acetylimidazole, 1-benzylimidazole, 2-alkylimidazole, 2-ethyl-4-methylimidazole, 2,4-dimethylimidazole, 2-phenylimidazole, n-tetrabutylammonium bromide or the derivative thereof, etc., and an added amount of the catalyst can be 500 ppm to 5000 ppm.

In the step 130, a dilution mixing step is performed, wherein an aromatic ring solvent and a methacrylic acid active ester represented by formula (iii) are added to the second mixture and mixed to obtain a third mixture: 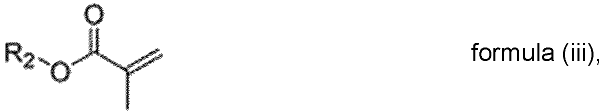 wherein R₂ is the aromatic ring group, which can be but not limited to phenyl group, 1-naphthyl group, 2-naphthyl group or perfluorophenyl group, preferably, R₂ of the present disclosure is phenyl group, which has a structure represented by formula (iii-1): 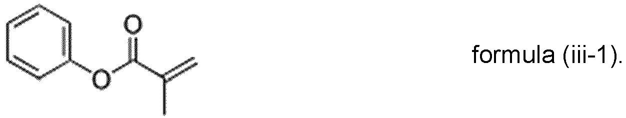 Furthermore, the aromatic ring solvent can be benzene, toluene or xylene.

In the step 140, a second active transesterification step is performed, wherein the third mixture is heated to a second temperature and maintained at the second temperature to react, so as to obtain a fourth mixture. Specifically, the second temperature is not higher than 130°C to prevent the bifunctional epoxy resin from self-polymerizing. If the second temperature is too low, the reaction rate will be low, so that the reaction time will be prolonged. Therefore, in the present disclosure, the second temperature preferably can be 110°C to 130°C, and is maintained at the second temperature for 2 hours to 6 hours. During the process, the epoxy group can be monitored by the fourier transform infrared spectrometer (FTIR), and the reaction is completed when the epoxy group completely disappear.

In the step 150, a filtering step is performed, wherein the fourth mixture is cooled and filtered to obtain the carbonate-containing oligomer represented by formula (I): 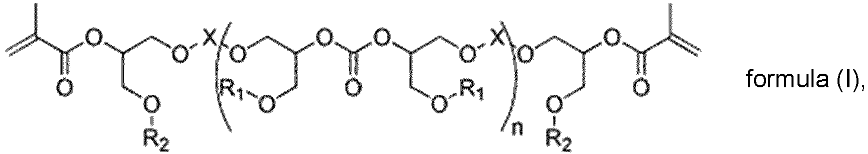 wherein R₁, R₂ and X are each independently the aromatic ring group, and n is an integer from 1 to 5. In detail, the n value of the product of formula (I) obtained in the step 150 is a normal distribution, so n may be an integer of 0, 1, 2, 3, 4 or 5. However, when the oligomer obtained from n is 0 lacks the carbonate structure, so n in the present disclosure is limited to an integer from 1 to 5.

Therefore, the manufacturing method for the carbonate-containing oligomer of the present disclosure uses the first-stage active ester reaction mechanism of the bis-aryl carbonate and the epoxy resin to perform the transesterification and chain extension of the epoxy resin. The molecular weight can be adjusted according to the molecular structure and the fiber impregnation requirement. Further, using the second-stage active ester reaction mechanism to modify the free radical curable functional group to the main structure, so that it can be introduced and used without special purification step to provide the feasibility of commercial mass production.

### <Crosslinked Product>

A crosslinked product is further provided of the present disclosure, which is obtained by mixing the aforementioned carbonate-containing oligomer represented by formula (I) with a modified polyphenylene ether resin, and adding a peroxide to perform a curing reaction. Specifically, a solid content ratio of the carbonate-containing oligomer represented by formula (I) and the modified polyphenylene ether resin can be 50:50 to 10:90, and the curing reaction can be performed by a staged heating method, but is not limited thereto. The modified polyphenylene ether resin can be methacrylate-modified polyphenylene ether or vinyl benzyl-modified polyphenylene ether, but is not limited thereto.

The present disclosure will be further exemplified by the following specific embodiments so as to facilitate utilizing and practicing the present disclosure completely by the people skilled in the art without over-interpreting and over-experimenting. However, the readers should understand that the present disclosure should not be limited to these practical details thereof, that is, these practical details are used to describe how to implement the materials and methods of the present disclosure and are not necessary.

### <Synthesis Example/Synthesis Comparative Example>

The manufacturing method for the carbonate-containing oligomer of the present disclosure is shown as follow Synthesis Example 1 and Synthesis Example 2. Synthesis Example 1: 136 parts by weight of the purified bisphenol A epoxy resin (epoxy equivalent is 170 g/eq to 172 g/eq) and 43 parts by weight of the diphenyl carbonate are placed in the reaction chamber equipped with the stirrer, the thermometer and the air tube, and the dry air is ventilated in the reaction chamber to heat to 90°C for 1 hour. Next, 1.25 parts by weight of 4-dimethylaminopyridine is added as the catalyst and maintained at 90°C for 2 hours, and the process is monitored by the fourier transform infrared spectrometer. Then, 166 parts by weight of toluene and 68 parts by weight of phenyl methacrylate are added to heat to 110°C for 6 hours to perform the reaction, and the process is monitored by the fourier transform infrared spectrometer. When the signal of the wave number of 915 cm⁻¹ is completely disappeared, indicating that the reaction is completed, and the mixture is cooled and filtered to obtain the carbonate-containing oligomer of Synthesis Example 1. Specifically, the data of the FTIR spectrum of Synthesis Example 1 is 1741 cm⁻¹ (C=O), 1720 cm⁻¹ (C=O), and 1637 cm⁻¹ (C=C). Furthermore, the carbonate-containing oligomer of Synthesis Example 1 is measured by gel chromatography permeability (GPC), the number average molecular weight (Mn) is 1511, and the weight average molecular weight (Mw) is 2549. The reaction equation of Synthesis Example 1 is shown in Table 1.

| |
|---|
| Table 1 |
| 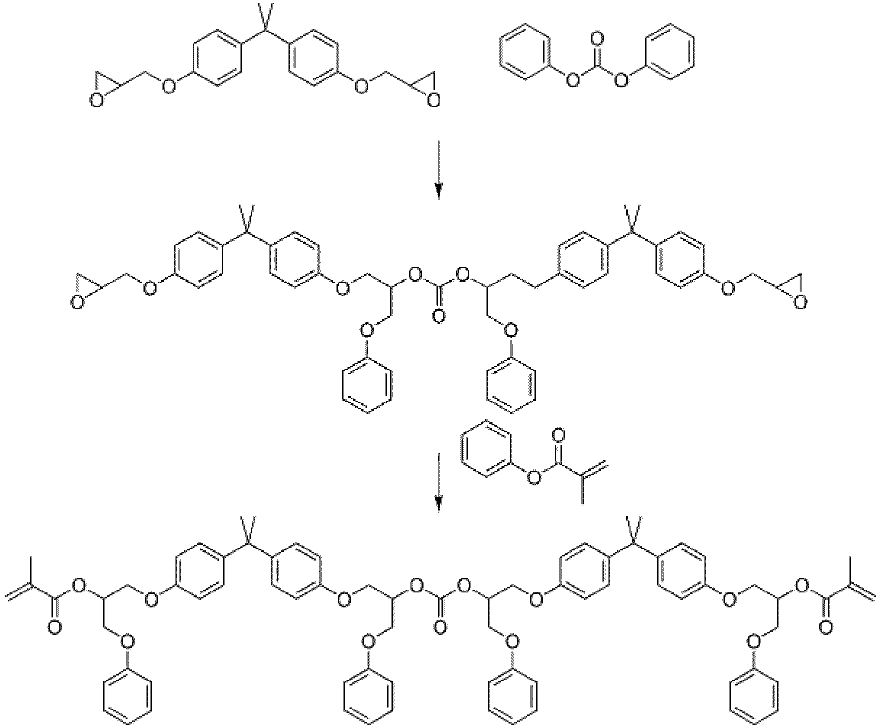 |

Synthesis Example 2: 136 parts by weight of the purified bisphenol A epoxy resin (epoxy equivalent is 170 g/eq to 172 g/eq) and 57 parts by weight of the diphenyl carbonate are placed in the reaction chamber equipped with the stirrer, the thermometer and the air tube, and the dry air is ventilated in the reaction chamber to heat to 110°C for 1 hour. Next, 1.16 parts by weight of 1-methylimidazole is added as the catalyst and maintained at 110°C for 2 hours, and the process is monitored by the fourier transform infrared spectrometer. Then, 196 parts by weight of xylene and 45 parts by weight of phenyl methacrylate are added to heat to 130°C for 6 hours to perform the reaction, and the process is monitored by the fourier transform infrared spectrometer. When the signal of the wave number of 915 cm⁻¹ is completely disappeared, indicating that the reaction is completed, and the mixture is cooled and filtered to obtain the carbonate-containing oligomer of Synthesis Example 2. Specifically, the data of the FTIR spectrum of Synthesis Example 2 is 1748 cm⁻¹ (C=O), 1721 cm⁻¹ (C=O), and 1637 cm⁻¹ (C=C). Furthermore, the carbonate-containing oligomer of Synthesis Example 2 is measured by gel chromatography permeability (GPC), the number average molecular weight (Mn) is 2089, and the weight average molecular weight (Mw) is 3802. The reaction equation of Synthesis Example 2 is shown in Table 2.

| |
|---|
| Table 2 |
| 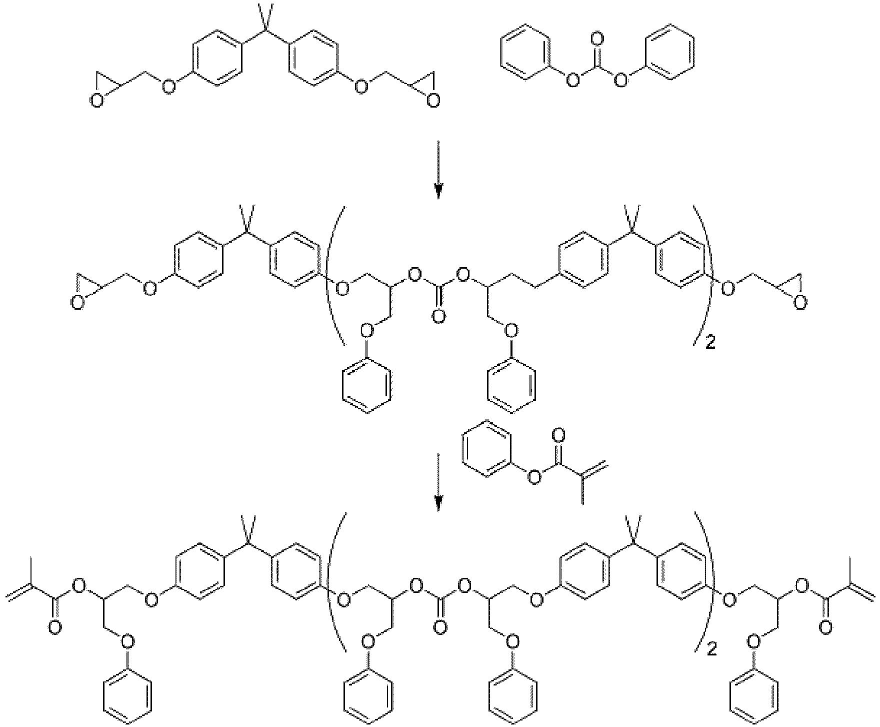 |

The manufacturing method for the carbonate-containing oligomer of the present disclosure is suitable for the ester with the epoxy structure, such as glycidyl methacrylate (GMA), which has both the epoxy group and the methacrylic acid functional group. After the modification by the above synthesis method, the structure has both the carbonate group and the methacrylic acid functional group also can be completed, as shown in Synthesis Comparative Example 1.

Synthesis Comparative Example 1: 142 parts by weight of the glycidyl methacrylate and 107 parts by weight of the diphenyl carbonate are placed in the reaction chamber equipped with the stirrer, the thermometer and the air tube, and the dry air is ventilated in the reaction chamber to heat to 120°C. Next, 0.5 parts by weight of n-tetrabutylammonium is added as the catalyst and maintained at 120°C for 6 hours, and the process is monitored by the fourier transform infrared spectrometer. When the signal of the wave number of 915 cm⁻¹ is completely disappeared, indicating that the reaction is completed, and the mixture is cooled and filtered to obtain the carbonate-containing compound of Synthesis Comparative Example 1. Specifically, the data of the FTIR spectrum of Synthesis Comparative Example 1 is 1756 cm⁻¹ (C=O), 1719 cm⁻¹ (C=O), and 1637 cm⁻¹ (C=C). The reaction equation of Synthesis Comparative Example 1 is shown in Table 3.

| |
|---|
| Table 3 |
| 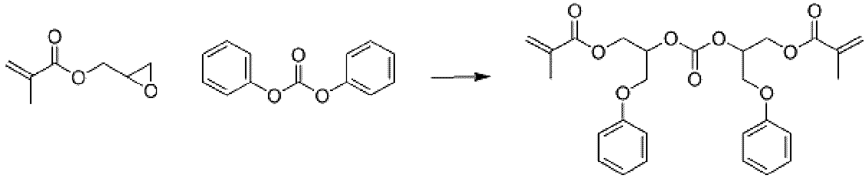 |

### <Example/Comparative Example>

Example 1: 8 parts by weight of methacrylate-modified polyphenylene ether resin (model SA9000, purchased from Sabic) is mixed with 3.3 parts by weight of Synthesis Example 1 (solid content is 60%), and 0.2 parts by weight of dicumyl peroxide is added therein. Next, the appropriate amount of butanone is added to adjust to the appropriate viscosity, and then pour into the aluminum plate that is treated by the release treatment with the appropriate amount. The aluminum plate is placed in the oven to cure to form the film in the nitrogen environment, and the curing temperature is raised in stages to obtain the sheet-shaped crosslinked product of Example 1.

Example 2: 5 parts by weight of methacrylate-modified polyphenylene ether resin is mixed with 8.3 parts by weight of Synthesis Example 1 (solid content is 60%), and 0.2 parts by weight of dicumyl peroxide is added therein. Next, the appropriate amount of butanone is added to adjust to the appropriate viscosity, and then pour into the aluminum plate that is treated by the release treatment with the appropriate amount. The aluminum plate is placed in the oven to cure to form the film in the nitrogen environment, and the curing temperature is raised in stages to obtain the sheet-shaped crosslinked product of Example 2.

Example 3: 8 parts by weight of methacrylate-modified polyphenylene ether resin is mixed with 3.6 parts by weight of Synthesis Example 2 (solid content is 55%), and 0.2 parts by weight of dicumyl peroxide is added therein. Next, the appropriate amount of butanone is added to adjust to the appropriate viscosity, and then pour into the aluminum plate that is treated by the release treatment with the appropriate amount. The aluminum plate is placed in the oven to cure to form the film in the nitrogen environment, and the curing temperature is raised in stages to obtain the sheet-shaped crosslinked product of Example 3.

Example 4: 5 parts by weight of methacrylate-modified polyphenylene ether resin is mixed with 9.1 parts by weight of Synthesis Example 2 (solid content is 55%), and 0.2 parts by weight of dicumyl peroxide is added therein. Next, the appropriate amount of butanone is added to adjust to the appropriate viscosity, and then pour into the aluminum plate that is treated by the release treatment with the appropriate amount. The aluminum plate is placed in the oven to cure to form the film in the nitrogen environment, and the curing temperature is raised in stages to obtain the sheet-shaped crosslinked product of Example 4. Furthermore, as the addition of Synthesis Example 2 increased, the surface of the crosslinked product thereof showed the slight phase separation.

Example 5: 60 parts by weight of methacrylate-modified polyphenylene ether resin is mixed with 16.7 parts by weight of Synthesis Example 1 (solid content is 60%), 10 parts by weight of butadiene-styrene copolymer (model Ricon 100, purchased from Total Cray Valley) and 20 parts by weight of triallyl isocyanurate (TAIC), and 2 parts by weight of dicumyl peroxide is added therein. Next, the appropriate amount of butanone is added to adjust to the appropriate viscosity, and then pour into the aluminum plate that is treated by the release treatment with the appropriate amount. The aluminum plate is placed in the oven to cure to form the film in the nitrogen environment, and the curing temperature is raised in stages to obtain the sheet-shaped crosslinked product of Example 5.

Comparative Example 1: 8 parts by weight of methacrylate-modified polyphenylene ether resin is mixed with 2 parts by weight of Synthesis Comparative Example 1, and 0.2 parts by weight of dicumyl peroxide is added therein. Next, the appropriate amount of butanone is added to adjust to the appropriate viscosity, and then pour into the aluminum plate that is treated by the release treatment with the appropriate amount. The aluminum plate is placed in the oven to cure to form the film in the nitrogen environment, and the curing temperature is raised in stages to obtain the sheet-shaped crosslinked product of Comparative Example 1.

Comparative Example 2: 5 parts by weight of methacrylate-modified polyphenylene ether resin is mixed with 5 parts by weight of Synthesis Comparative Example 1, and 0.2 parts by weight of dicumyl peroxide is added therein. Next, the appropriate amount of butanone is added to adjust to the appropriate viscosity, and then pour into the aluminum plate that is treated by the release treatment with the appropriate amount. The aluminum plate is placed in the oven to cure to form the film in the nitrogen environment, and the curing temperature is raised in stages. In the end, the curing shrinkage is too severe and the complete cured film cannot be produced.

Comparative Example 3: 10 parts by weight of methacrylate-modified polyphenylene ether resin is dissolved in the toluene, and 0.2 parts by weight of dicumyl peroxide is added therein. Next, the appropriate amount of butanone is added to adjust to the appropriate viscosity, and then pour into the aluminum plate that is treated by the release treatment with the appropriate amount. The aluminum plate is placed in the oven to cure to form the film in the nitrogen environment, and the curing temperature is raised in stages to obtain the sheet-shaped crosslinked product of Comparative Example 3.

In the high-speed circuit, the propagation delay of signal depends on the dielectric constant (Dₖ). The substrate of the low dielectric constant material can reduce the propagation delay of the signal, and another factor that affects the signal transmission quality is the dissipation factor (D_{f}). The smaller the dissipation factor, the smaller the signal loss, so that the high-frequency and low-loss substrate material usually has the electrical performance of the low dielectric constant and the low dissipation factor. Further, in order to understand the electrical performance of the carbonate-containing oligomer of the present disclosure, the glass transition temperature (T_{g}), 5% thermogravimetric loss temperature (T_{d5}), 800°C Char yield, dielectric constant (Dₖ) and dissipation factor (D_{f}) of the crosslinked product of Example 1 to Example 5 and Comparative Example 1 to Comparative Example 3 are measured as follows.

### <Evaluation Test Method>

Dielectric analysis method: the dielectric constant (Dₖ) and the dissipation factor (D_{f}) of the crosslinked product are measured at 10 GHz.

Glass transition temperature (T_{g}): the glass transition temperature of the crosslinked product is measured by differential scanning calorimetry (DSC), and the condition is detected at the heating rate of 10°C/min.

5% thermogravimetric loss temperature (T_{d5}) and Char yield: 5% thermogravimetric loss temperature and 800°C Char yield of the crosslinked product are measured by thermo-gravimetric analysis (TGA), and the condition is detected at the heating rate of 10°C/min under the nitrogen atmosphere.

Example 1 to Example 5 and Comparative Example 1 to Comparative Example 3 are measured by the aforementioned evaluation test method, and the results are shown in Table 4.

| Table 4 | | | | | |
|---|---|---|---|---|---|
| | Dₖ | D_{f} | T_{g} (°C) | T_{d5} (°C) | Char yield (%) |
| Example 1 | 2.72 | 0.0066 | 158.3 | 363.6 | 16.00 |
| Example 2 | 2.75 | 0.0080 | 79.8 | 354.5 | 11.63 |
| Example 3 | 2.73 | 0.0067 | 155.1 | 363.3 | 15.68 |
| Example 4 | 2.77 | 0.0081 | 71.5 | 352.7 | 12.53 |
| Example 5 | 2.74 | 0.0072 | 173.4 | 357.8 | 16.01 |
| Comparative Example 1 | 2.94 | 0.0075 | 170.7 | 339.5 | 14.13 |
| Comparative Example 2 | - | - | 112.1 | 289.7 | 10.52 |
| Comparative Example 3 | 2.70 | 0.0064 | 178.2 | 377.1 | 22.65 |

As shown in Table 4, compared with Comparative Example 3, the carbonate-containing oligomer of the present disclosure added in Example 1 to Example 4 at the glass transition temperature (T_{g}), 5% thermogravimetric loss temperature (T_{d5}) and Char yield are shown the decreasing trend. Furthermore, the electrical performance of Example 1 and Example 3 still maintain the certain level, while the surface of the crosslinked product of Example 4 shows the slight phase separation state, indicating that the molecular weight of the carbonate-containing oligomer of the present disclosure needs to be controlled and should not be too large. In addition, the glue of Example 5 is homogeneous before curing, which shows that the compatibility between Synthesis Example 1 of the present disclosure and the ingredients SA9000, Ricon 100 and TAIC commonly used in the industry is high, and there is no phase separation after curing. Moreover, Comparative Example 1 is cured by using Synthesis Comparative Example 1, the structure of Synthesis Comparative Example 1 has the smaller molecular weight and the glass transfer temperature after curing has the small decrease, but it lacks rigid structure such as aromatic ring, resulting in the significant decrease in the 5% thermogravimetric loss temperature and the electrical performance is also significant decrease. Further, in Comparative Example 2, the addition ratio of Synthesis Comparative Example 1 is increased, even causing the curing shrinkage and failure to form the film. Therefore, it can be proved that the carbonate-containing oligomer of the present disclosure has the great development potential in the production of the high-frequency and low-loss substrate.

In conclusion, compared with the prior art, the carbonate-containing oligomer of the present disclosure uses the reaction mechanism of epoxy resin and active ester to achieve the process that can be used without specific purification. Furthermore, the carbonate-containing oligomer of the present disclosure can be used with the commercially modified polyphenylene ether resin to create the more balanced formula application value.

## Claims

1. A carbonate-containing oligomer, **characterized in** comprising a structure represented by formula (I): 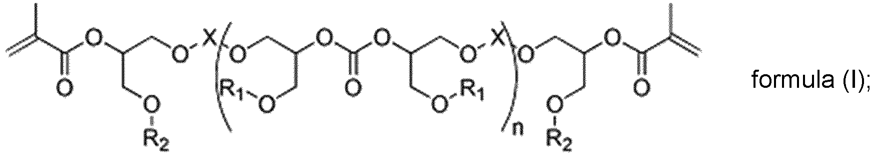 wherein R₁, R₂ and X are each independently an aromatic ring group, and n is an integer from 1 to 5.

2. A manufacturing method for a carbonate-containing oligomer (100), **characterized in** comprising:
performing a mixing step (110), wherein a purified bifunctional epoxy resin represented by formula (i) is mixed with a carbonate-containing compound represented by formula (ii), and a first mixture is obtained by heating to a first temperature to accelerate a dissolution: 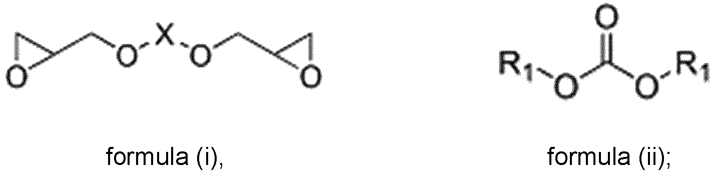
performing a first active transesterification step (120), wherein a catalyst is added to the first mixture and maintained at the first temperature to react, so as to obtain a second mixture;
performing a dilution mixing step (130), wherein an aromatic ring solvent and a methacrylic acid active ester represented by formula (iii) are added to the second mixture and mixed to obtain a third mixture: 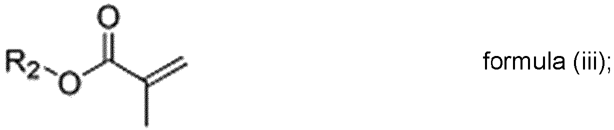
performing a second active transesterification step (140), wherein the third mixture is heated to a second temperature and maintained at the second temperature to react, so as to obtain a fourth mixture; and
performing a filtering step (150), wherein the fourth mixture is cooled and filtered to obtain the carbonate-containing oligomer represented by formula (I): 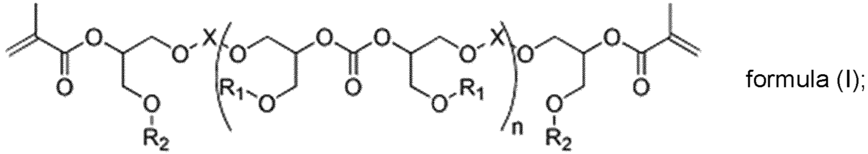
wherein R₁, R₂ and X are each independently an aromatic ring group, and n is an integer from 1 to 5.

3. The manufacturing method for the carbonate-containing oligomer (100) of claim 2, wherein the first temperature is not higher than 130°C.

4. The manufacturing method for the carbonate-containing oligomer (100) of claims 2 or 3, wherein the first temperature is 80°C to 120°C.

5. The manufacturing method for the carbonate-containing oligomer (100) of any one of claims 2 to 4, wherein the catalyst is a pyridine derivative, an imidazole derivative or a quaternary alkylammonium salt derivative.

6. The manufacturing method for the carbonate-containing oligomer (100) of any one of claims 2 to 5, wherein an added amount of the catalyst is 500 ppm to 5000 ppm.

7. The manufacturing method for the carbonate-containing oligomer (100) of any one of claims 2 to 6, wherein the aromatic ring solvent is benzene, toluene or xylene.

8. The manufacturing method for the carbonate-containing oligomer (100) of any one of claims 2 to 7, wherein the second temperature is 110°C to 130°C.

9. A crosslinked product, which is obtained by mixing the carbonate-containing oligomer of claim 1 with a modified polyphenylene ether resin, and adding a peroxide to perform a curing reaction.

10. The crosslinked product of claim 9, wherein a solid content ratio of the carbonate-containing oligomer and the modified polyphenylene ether resin is 50:50 to 10:90.

11. The crosslinked product of claims 9 or 10, wherein the modified polyphenylene ether resin is methacrylate-modified polyphenylene ether.

## Patentansprüche

1. Carbonathaltiges Oligomer, **dadurch gekennzeichnet, dass** es eine durch die Formel (I) dargestellte Struktur umfasst: 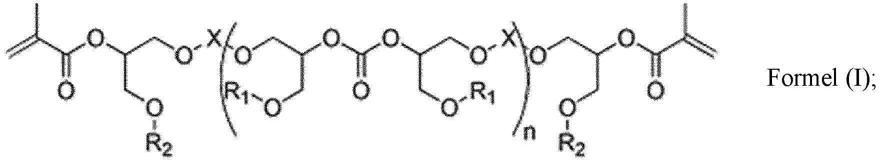 worin R₁, R₂ und X jeweils unabhängig voneinander eine aromatische Ringgruppe sind und n eine ganze Zahl von 1 bis 5 ist.

2. Herstellungsverfahren für ein carbonathaltiges Oligomer (100), **dadurch gekennzeichnet, dass** es umfasst:
Durchführen eines Mischschritts (110), wobei ein gereinigtes bifunktionelles Epoxidharz, dargestellt durch Formel (i), mit einer carbonathaltigen Verbindung, dargestellt durch Formel (ii), gemischt wird und eine erste Mischung durch Erhitzen auf eine erste Temperatur erhalten wird, um eine Auflösung zu beschleunigen: 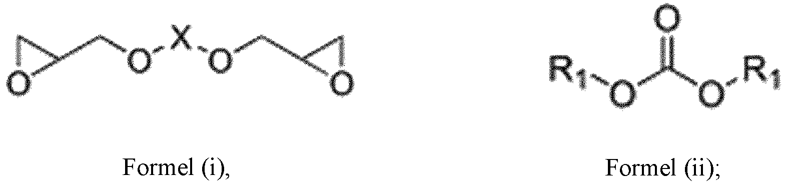
Durchführen eines ersten aktiven Umesterungsschritts (120), bei dem ein Katalysator zu der ersten Mischung gegeben und bei der ersten Temperatur gehalten wird, um zu reagieren, so dass eine zweite Mischung erhalten wird;
Durchführen eines Verdünnungsmischschritts (130), wobei ein aromatisches Ringlösungsmittel und ein aktiver Methacrylsäureester der Formel (iii) zu der zweiten Mischung gegeben und gemischt werden, um eine dritte Mischung zu erhalten: 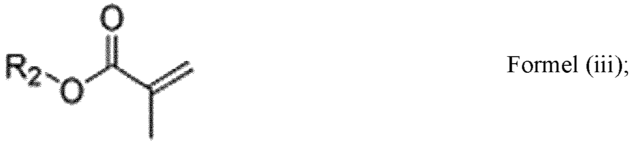
Durchführen eines zweiten aktiven Umesterungsschritts (140), bei dem die dritte Mischung auf eine zweite Temperatur erhitzt und bei der zweiten Temperatur gehalten wird, um zu reagieren, so dass eine vierte Mischung erhalten wird; und
Durchführen eines Filtrationsschritts (150), wobei die vierte Mischung abgekühlt und filtriert wird, um das carbonathaltige Oligomer der Formel (I) zu erhalten: 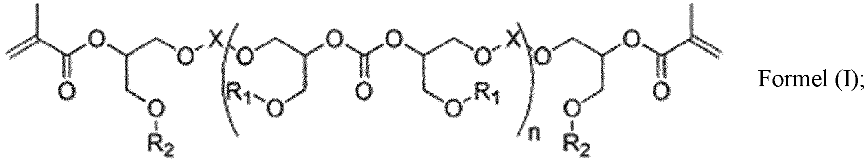
worin R₁, R₂ und X jeweils unabhängig voneinander eine aromatische Ringgruppe sind und n eine ganze Zahl von 1 bis 5 ist.

3. Verfahren zur Herstellung des carbonathaltigen Oligomers (100) nach Anspruch 2, wobei die erste Temperatur nicht höher als 130°C ist.

4. Verfahren zur Herstellung des carbonathaltigen Oligomers (100) nach Anspruch 2 oder 3, wobei die erste Temperatur 80°C bis 120°C beträgt.

5. Verfahren zur Herstellung des carbonathaltigen Oligomers (100) nach einem der Ansprüche 2 bis 4, wobei der Katalysator ein Pyridinderivat, ein Imidazolderivat oder ein quaternäres Alkylammoniumsalzderivat ist.

6. Verfahren zur Herstellung des carbonathaltigen Oligomers (100) nach einem der Ansprüche 2 bis 5, wobei die zugesetzte Menge des Katalysators 500 ppm bis 5000 ppm beträgt.

7. Verfahren zur Herstellung des carbonathaltigen Oligomers (100) nach einem der Ansprüche 2 bis 6, wobei das aromatische Ringlösungsmittel Benzol, Toluol oder Xylol ist.

8. Verfahren zur Herstellung des carbonathaltigen Oligomers (100) nach einem der Ansprüche 2 bis 7, wobei die zweite Temperatur 110°C bis 130°C beträgt.

9. Vernetztes Produkt, das durch Mischen des carbonathaltigen Oligomers nach Anspruch 1 mit einem modifizierten Polyphenylenetherharz und Zugabe eines Peroxids zur Durchführung einer Härtungsreaktion erhalten wird.

10. Vernetztes Produkt nach Anspruch 9, wobei das Verhältnis des Feststoffgehalts des carbonathaltigen Oligomers und des modifizierten Polyphenylenetherharzes 50:50 bis 10:90 beträgt.

11. Vernetztes Produkt nach Anspruch 9 oder 10, wobei das modifizierte Polyphenylenetherharz ein methacrylatmodifizierter Polyphenylenether ist.

## Revendications

1. Oligomère contenant du carbonate, **caractérisé en ce qu'**il comporte une structure représentée par la formule (I) : 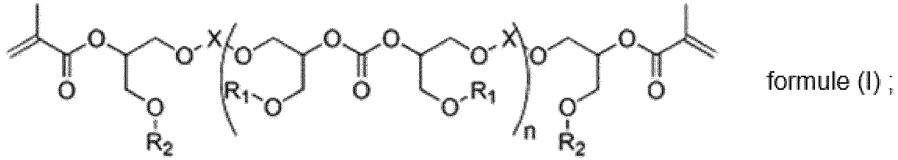 dans laquelle R₁, R₂ et X représentent chacun, indépendamment les uns des autres, un groupe cyclique aromatique, et n est un entier de 1 à 5.

2. Procédé de fabrication d'un oligomère contenant du carbonate (100), **caractérisé en ce qu'**il comporte de :
réaliser une étape de mélange (110), dans laquelle une résine époxyde bifonctionnelle purifiée représentée par la formule (i) est mélangée avec un composé contenant du carbonate représenté par la formule (ii), et un premier mélange est obtenu en chauffant jusqu'à une première température afin d'accélérer une dissolution ; 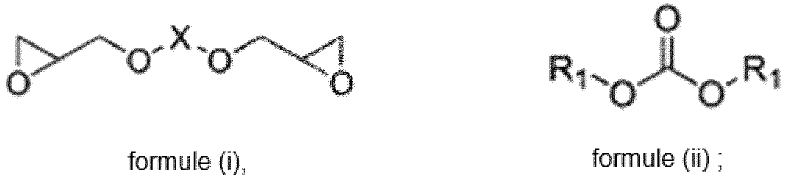
réaliser une première étape de transestérification active (120), dans laquelle un catalyseur est ajouté au premier mélange et maintenu à la première température pour réagir, de manière à obtenir un deuxième mélange ;
réaliser une étape de mélange par dilution (130), dans laquelle un solvant cyclique aromatique et un ester actif d'acide méthacrylique représenté par la formule (iii) sont ajoutés au deuxième mélange et mélangés pour obtenir un troisième mélange ; 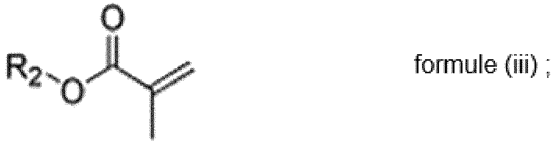
réaliser une seconde étape de transestérification active (140), dans laquelle le troisième mélange est chauffé jusqu'à une seconde température et maintenu à la seconde température pour réagir, de manière à obtenir un quatrième mélange ; et
réaliser une étape de filtration (150), dans laquelle le quatrième mélange est refroidi et filtré pour obtenir l'oligomère contenant du carbonate représenté par la formule (I) : 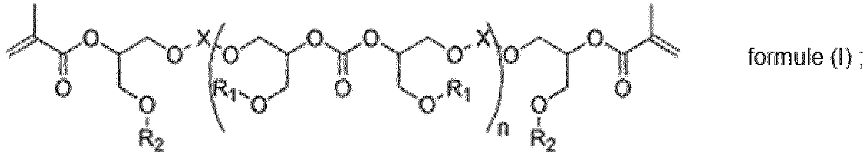
dans laquelle R₁, R₂ et X représentent chacun, indépendamment les uns des autres, un groupe cyclique aromatique, et n est un entier de 1 à 5.

3. Procédé de fabrication de l'oligomère contenant du carbonate (100) de la revendication 2, dans lequel la première température n'est pas supérieure à 130 °C.

4. Procédé de fabrication de l'oligomère contenant du carbonate (100) des revendications 2 ou 3, dans lequel la première température est de 80 °C à 120 °C.

5. Procédé de fabrication de l'oligomère contenant du carbonate (100) de l'une quelconque des revendications 2 à 4, dans lequel le catalyseur est un dérivé de pyridine, un dérivé d'imidazole ou un dérivé de sel d'alkyl ammonium quaternaire.

6. Procédé de fabrication de l'oligomère contenant du carbonate (100) de l'une quelconque des revendications 2 à 5, dans lequel une quantité ajoutée du catalyseur est de 500 ppm à 5 000 ppm.

7. Procédé de fabrication de l'oligomère contenant du carbonate (100) de l'une quelconque des revendications 2 à 6, dans lequel le solvant cyclique aromatique est le benzène, le toluène ou le xylène.

8. Procédé de fabrication de l'oligomère contenant du carbonate (100) de l'une quelconque des revendications 2 à 7, dans lequel la seconde température est de 110 °C à 130 °C.

9. Produit réticulé, qui est obtenu en mélangeant l'oligomère contenant du carbonate de la revendication 1 avec une résine de polyéther de phénylène modifié, et en ajoutant un péroxyde pour réaliser une réaction de durcissement.

10. Produit réticulé selon la revendication 9, dans lequel un rapport de teneur en matières solides de l'oligomère contenant du carbonate et de la résine de polyéther de phénylène modifié est de 50:50 à 10:90.

11. Produit réticulé selon les revendications 9 ou 10, dans lequel la résine de polyéther de phénylène modifié est un polyéther de phénylène modifié par du méthacrylate.
